Europäisches Patentamt

European Patent Office

Office européen des brevets

(19)

(11) Publication number: **0 019 479**
**B1**

(12) **EUROPEAN PATENT SPECIFICATION**

(45) Date of publication of patent specification: **15.02.84**

(51) Int. Cl.³: **G 01 G 19/04**

(21) Application number: **80301628.6**

(22) Date of filing: **19.05.80**

(54) System for weighing freight cars in motion during loading.

(30) Priority: **21.05.79 US 40572**

(43) Date of publication of application:
**26.11.80 Bulletin 80/24**

(45) Publication of the grant of the patent:
**15.02.84 Bulletin 84/7**

(84) Designated Contracting States:
**AT BE CH DE FR GB IT LI LU NL SE**

(56) References cited:
**FR - A - 1 379 619**
**US - A - 3 374 844**
**US - A - 4 094 367**

(73) Proprietor: **RAILWEIGHT LIMITED**
**Station Road Birch Vale**
**Stockport Cheshire SK12 5BP (GB)**

(72) Inventor: **Caldicott, Jack Richard**
**163 Kelsey Court**
**Barrington Illinois 60010 (US)**

(74) Representative: **Allman, Peter John et al,**
**Marks and Clerk Scottish Life House Bridge Street**
**Manchester M3 3DP (GB)**

Courier Press, Leamington Spa, England.

System for weighing freight cars in motion during loading

The present invention concerns a system for weighing and loading freight cars coupled in motion.

In many coal-producing countries, there is an increasing tendency to carry large loads of coal long distances by rail. To keep this operation as efficient as possible, it is desirable to transport as much coal per freight car as is possible commensurate with keeping the loads within safe limits to avoid derailment problems.

Freight costs are frequently based on the maximum load capacity of a given train. However, the shippers, for example, the coal mine owners, must be careful not to overload a freight car. Any costs involved due to delays in the train operations through overloaded freight cars are charged to the shipper. Such delays can be both very expensive and time consuming with the result that there is frequently a tendency for the shipper to underfill the freight cars to avoid the penalties associated with overloading.

Known freight car weighing systems seek to provide two things, that is firstly a measurement of the weight of a car as it is being loaded so that loading can be terminated when the maximum permissible load is reached, and secondly an accurate measurement of the weight of the car once the loading has been terminated. The first measurement is required so that safety standards are complied with and the second measurement is required so that the actual weight of goods delivered can be accurately assessed.

Ideally one would make both measurements using a single weight bridge upon which all the axles of the car to be loaded are supported both during loading and immediately after termination of loading. With an in motion weighing system however the two measurements could only be taken using a single weigh bridge the length of which was considerably greater than the distance between the first and last axles of the car to be weighed. Given that the nearest adjacent axles of two coupled together cars are fairly close together it becomes impossible to use a single weigh bridge to make the two measurements as before the loading of a car can be terminated and its weight determined the leading axle of the subsequent car in the train has moved onto the single weigh bridge.

To get over this problem it is known to split the weigh bridge into upstream and downstream sections in accordance with U.S.—A—4094367, the specification describing a system in which the weight of the car during loading is determined by summing the weights resting on the two weigh bridges (which when loading terminates includes the last axle of the preceding car) and then subtracting from that sum the weight of the said last axle as previously determined by the upstream weigh bridge. In this system however it is difficult to achieve high accuracy the measured weight of the car in its loaded condition being the result of a subtraction calculation based on two separate weighings, one of the two weighings being of only a part of the weight of the preceding car.

It is, therefore, an object of the invention to provide an accurate system for loading freight cars which will ensure that the freight cars are filled virtually to their maximum capacities, but will also avoid overloading.

According to the present invention, there is provided a system for controlling the loading of a freight car and determining its weight when loaded when the freight car is in motion and coupled to at least one other vehicle, comprising an upstream weigh bridge having a length that is less than the distance between an axle of the car and the adjacent axle of the or either of the other vehicles, a downstream weigh bridge mechanically separated from the upstream weigh bridge to detect the full draft weight of the car after all the axles of the car have left the upstream weigh bridge, a loading chute positioned above one of said weigh bridges and arranged to dispense material, and means for detecting the increasing weight of the freight car during loading taking into consideration the combined weights on the upstream and downstream weigh bridges, and for closing the chute when the detected weight increases to a predetermined limit, characterised in that said means are arranged to determine the weight of the loaded car after all the axles of the car have left the upstream weigh bridge taking into consideration only the weight on the downstream weigh bridge.

Thus the present invention uses upstream and downstream weigh bridges and determines the weight during loading by a calculation based on the weights on the two weigh bridges, but the weight of the car after loading is terminated is determined directly by reference to the weight on the downstream weigh bridge.

Preferably, the downstream weigh bridge comprises a plurality of mechanically separated weigh bridge sections operable for full draft weighing during loading of different dimensioned freight cars.

Means may be provided for sensing the arrival of the front axle of the car on the downstream weigh bridge and means are provided responsive to such sensing to open the chute. The sensing means may comprise means for sensing the movement of the front axle of the car from the upstream weigh bridge to the downstream weigh bridge.

Means may be provided for detecting when the car reaches a location at which it is about to move beyond the region below the chute, and means are provided for closing the chute when the car reaches the said location.

Means may also be provided for sensing a locomotive and for inhibiting operation of the loading chute when a locomotive is sensed.

The invention also comprises a method for controlling the loading of a freight car and determining its weight when loaded, as defined in claim 7.

Embodiments of the invention will now be described with reference to the accompanying drawings, in which:

Fig. 1 is a diagram of a system for weighing freight cars coupled in motion during loading, in accordance with the principles of the present invention, with the train being diagrammatically illustrated in a first position;

Fig. 2 is similar to the Fig. 1 diagram, but shows the train in a second position;

Fig. 3 is similar to the Fig. 2 diagram, but shows the train in a third position;

Fig. 4 is similar to the Fig. 3 diagram, but shows the train in a fourth position;

Fig. 5 is similar to the Fig. 4 diagram, but shows the train in a fifth position; and

Fig. 6 is a diagram of a system for weighing freight cars coupled in motion during loading according to a modified form of the present invention.

The system illustrated herein may be used in conjunction with a "flood" loading bunker system. To this end, a combination of weigh bridges are provided beneath a "flood" loading chute with the output signal from the weigh bridges, in combination with vehicle axle detection equipment, being used to control the opening and closing of the chute and to obtain accurate final weights, while the train is in motion.

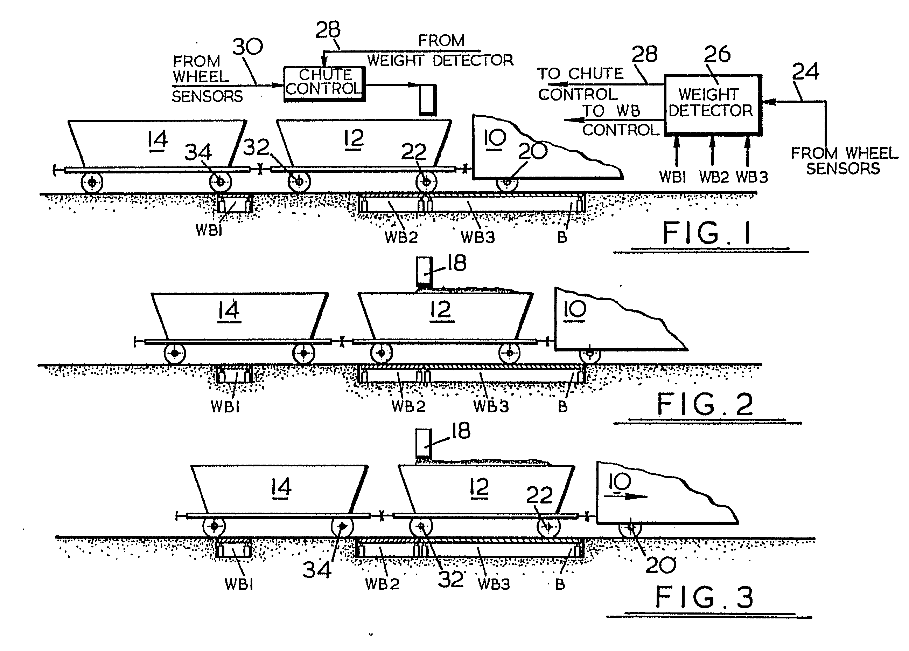

Referring now to the figures, in Fig. 1 a train is diagrammatically illustrated comprising a locomotive 10, a first freight car 12 in the form of a coal car and a second freight car 14 also in the form of a coal car.

A first weigh bridge WB1 is provided for obtaining the tare of empty weight of the freight cars as the train moves from left to right, in other words, prior to loading. Two weigh bridges are utilized to obtain weight information for controlling the loading chute 18 and for obtaining accurate gross weights. These two weigh bridges are upstream weigh bridge WB2 and downstream weigh bridge WB3 which is mechanically separated from upstream weigh bridge WB2. Upstream weigh bridge WB2 and downstream weigh bridge WB3 are located adjacent each other so that both of the weigh bridges WB2 and WB3 can preferably be used to detect the weight of the freight car under consideration during loading thereof. The upstream weigh bridge WB2 serves to provide an extra weigh bridge length for permitting an extra amount of roll during weighing of the freight car under consideration, but the weight on the upstream weigh bridge WB2 is not taken into consideration *after* the freight car is fully loaded and the weight of the loaded freight car is being determined.

The operation of the system can be most easily understood by referring to the figures with the train being shown in different positions in succeeding figures. Thus in Fig. 1, the last axle 20 of locomotive 10 is on weigh bridge WB3 and the first axle 22 of freight car 12 is passing between upstream weigh bridge WB2 and downstream weigh bridge WB3. While the sensing of the axle transitions from the upstream weigh bridge WB2 to the downstream weigh bridge WB3 may be utilized to sense the positions of the cars of the train, the use of strategically placed track switches, as disclosed in Rogers U.S. Patent No. 3,374,844, may also be used to determine the type of car, number of axles, and position of the axles.

Thus if the track circuitry on the weigh bridges WB2 and WB3 detects that a locomotive is passing over the weigh bridges, inhibit signals are provided via line 24 to weigh detector 26 which will inhibit detection of weight of the locomotive and will provide chute control signals via line 28 to inhibit opening of the chute. If desired, the wheel sensors may be connected directly via line 30 to the chute control for providing direct chute control inhibit signals to prevent the chute from opening while the locomotive is on the weigh bridges.

Once first axle 22 of freight car 12 moves onto weigh bridge WB3, the front end of freight car 12 will be beneath the loading chute 18 and a signal from the wheel sensors will be provided via line 30 to the chute control to open the chute. As the train moves, the freight car 12 is flood-loaded and no action is taken by the weighing equipment until the last axle 20 of the locomotive 10 passes off weigh bridge WB3. Once the last axle 20 has passed off the weigh bridge, the combined output of weigh bridges WB2 and WB3 are used to detect a fully loaded condition of freight car 12, with allowance being made for coal in transit from the chute. Once this fully loaded condition is detected, the weight detector 26 which receives weight signals from the weigh bridges will provide a signal via line 28 to close the chute.

If for some reason the fully loaded condition has not occurred prior to the last axle 32 of freight car 12 moving onto downstream weigh bridge WB3, the transition of the last axle 32 from upstream weigh bridge WB2 to downstream weigh bridge WB3 will provide a signal to close the chute automatically, to avoid spillage between freight cars. Further, once axles 22 and 32 are scale-borne on downstream weigh bridge WB3, weigh detector 26 senses only the weight on downstream weigh bridge WB3 so as to provide the full draft weight of the loaded freight car.

In Fig. 1, the train is shown in a position wherein the first axle 22 of freight car 12 is moving from upstream weigh bridge WB2 to downstream weigh bridge WB3, thereby providing a signal for chute 18 to open. In Fig. 2, the last axle 20 of the locomotive 10 is moving off downstream weigh bridge WB3. Axles 22 and 32 of freight car 12 are on downstream weigh bridge WB3 and upstream weigh bridge WB2, respectively, and weight detector 26 is operating to detect the full draft weight of freight car 12 during its loading. If freight car 12 becomes fully loaded to a predetermined weight, chute 18 will be automatically closed.

In Fig. 3, the last axle 32 of freight car 12 is passing from upstream weigh bridge WB2 to downstream weigh bridge WB3. If chute 18 has not previously been closed as a result of a fully loaded freight car, the chute 18 will automatically be closed as a result of the transition of last axle 32 from weigh bridge WB2 to weigh bridge WB3.

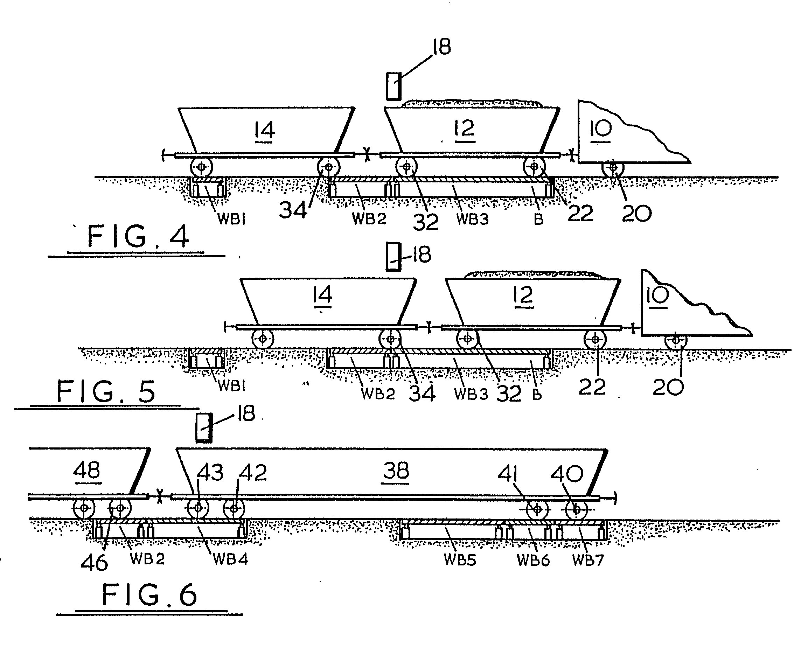

In Fig. 4, both axles 22 and 32 of freight car 12 are on downstream weigh bridge WB3 and the freight car is fully loaded. A weight determination is made, using only the weight on downstream weigh bridge WB3 and excluding any weight on upstream weigh bridge WB2. The weight determination on downstream weigh bridge WB3 could be full draft or multi-draft. In this manner, if the first axle 34 of freight car 14 were on upstream weigh bridge WB2 while both axles of freight car 12 were on downstream weigh bridge WB3, the weight of axle 34 would not be taken into consideration during the weighing of freight car 12. On the other hand, by using upstream weigh bridge WB2 during loading of freight car 12, the weight of the freight car during loading can be determined with sufficient additional roll provided by the upstream weigh bridge WB2 to enable proper detection of the weight during loading.

In Fig. 5, the first axle 34 of freight car 14 is moving from upstream weigh bridge WB2 to downstream weigh bridge WB3 and thus a signal will be provided to open the chute to begin loading freight car 14. Freight car 14 will be loaded and weighed as previously described with respect to freight car 12.

In summary, a split weigh bridge or an upstream weigh bridge and a downstream weigh bridge is provided. The freight car can be full draft weighed during loading and the problem of having a foreign axle on the upstream weigh bridge is obviated. To accomplish this result, the upstream weigh bridge has a length that is less than the distance between the rear axle of a car to be loaded and the front axle of the succeeding car. Thus, once the front axle of the succeeding car (foreign axle) is on the upstream weigh bridge, the rear axle of the car being loaded has left the upstream weigh bridge and the weight on the upstream weigh bridge is not taken into consideration.

However, the upstream weigh bridge provides an extra roll length and the loading can operate during the time that the axles are on both the upstream weigh bridge and the downstream weigh bridge. Once the car is moved onto the downstream weigh bridge, the output of the upstream weigh bridge is not used to determine the full draft weight of the car.

In the modified form of the invention illustrated in Fig. 6, the downstream weigh bridge comprises a plurality of mechanically separated weigh bridge sections WB4, WB5, WB6 and WB7. Thus upstream weigh bridge WB2 provides extra roll for the freight car being loaded. The output of the upstream weigh bridge WB2 is not used once the car being loaded is moved onto the downstream weigh bridge.

By providing a downstream weigh bridge having separated sections, freight cars having various lengths can be weighed with various sections being electrically and mechanically disconnected during weighing so that the axles of a foreign freight car will not be taken into consideration. Thus referring to Fig. 6, freight car 38 includes first axle 40, second axle 41, third axle 42 and fourth axle 43. When second axle 41 enters downstream weigh bridge segment WB4 from upstream weigh bridge WB2, chute 18 is automatically opened to begin the loading operation. During loading, the weight of freight car 38's axles on both the upstream and downstream weigh bridges are taken into consideration while axles of the car being loaded are in the upstream weigh bridge. Once the weight has reached a predetermined amount, loading chute 18 is closed. A final weight of the loaded freight car 38 may then be taken. The final weight is not affected by first axle 46 of freight car 48 being on the upstream weight bridge WB2.

By using various lengths and combination of weigh bridges together with track circuitry to detect different types of freight cars, the loading of different types of freight cars may be monitored and detected using the principles of this invention. Reference is made to Jones and Hochberger U.S. Patent No. 4,094,367 for a description of a system for full draft weighing of freight cars coupled in motion during loading, for an example of the locations of wheel sensors, for information relating to the adding of a preload compensation amount on the scales to compensate for the weight of material that will continue through the chute until the chute is closed and for other pertinent circuitry.

As a specific example, although no limitation is intended, the weigh bridges illustrated in Fig. 6 may have the following dimensions. Upstream weigh bridge WB2 may be 1.83 metres (6 feet) in length, downstream weigh bridge segment WB4 may be 3.66 metres (12 feet) in length, downstream weigh bridge segment WB5 may be separated from weigh bridge segment WB4 by 5.18 metres (17 feet) and be 3.66 metres (12 feet) in length, weigh bridge segment WB6 may be 1.83 metres (6 feet) in length and weigh bridge segment WB7 may be 1.83 metres (6 feet) in length.

Although illustrative embodiments of the invention have been shown and described, it is to be understood that various modifications and substitutions may be made. For example, the system may be used for weighing automotive trucks in addition to railroad cars. Thus the term "freight car" is intended to encompass both railroad freight cars and automotive trucks.

**Claims**

1. A system for controlling the loading of a freight car and determining its weight when loaded when the freight car is in motion and coupled to at least one other vehicle, comprising an upstream weigh bridge (WB2) having a length that is less than the distance between an axle of the car and the adjacent axle of the or either of the other vehicles, a downstream weigh bridge (WB3; WB4, WB5, WB6, WB7) mechanically separated from the upstream weigh bridge to detect the full draft weight of the car after all the axles of the car have left the upstream weigh bridge, a loading chute (18) positioned above one of said weigh bridges and arranged to dispense material, and means (26) for detecting the increasing weight of the freight car during loading taking into consideration the combined weights on the upstream and downstream weigh bridges, and for closing the chute when the detected weight increases to a predetermined limit, characterised in that said means (26) are arranged to determine the weight of the loaded car (12; 38) after all the axles of the car have left the upstream weigh bridge (WB2) taking into consideration only the weight on the downstream weigh bridge (WB3; WB4, WB5, WB6, WB7).

2. A system according to claim 1, characterised in that the downstream weigh bridge comprises a plurality of mechanically separated weigh bridge sections (WB4; WB5; WB6; WB7) operable for full draft weighing during loading of different dimensioned freight cars.

3. A system according to claim 1 or 2, characterised in that means (30) are provided for sensing the arrival of the front axle of the car on the downstream weigh bridge (WB3; WB4, WB5, WB6, WB7), and means are provided responsive to such sensing to open the chute.

4. A system according to claim 3, characterised in that the said sensing means comprises means for sensing the movement of the front axle of the car from the upstream weigh bridge (WB2) to the downstream weigh bridge (WB3; WB4, WB5, WB6, WB7).

5. A system according to any preceding claim, characterised in that means are provided for detecting when the car reaches a location at which it is about to move beyond the region below the chute, and means are provided for closing the chute when the car reaches the said location.

6. A system according to any preceding claim, characterised in that means are provided for sensing a locomotive and for inhibiting operation of the loading chute when a locomotive is sensed.

7. A method for controlling the loading of a freight car and determining its weight when loaded when the freight car is in motion and coupled to at least one other vehicle, wherein the freight car is caused to move over an upstream weigh bridge (WB2) having a length that is less than the distance between an axle of the car and the adjacent axle of the or either of the other vehicles, and over a downstream weigh bridge (WB3; WB4, WB5, WB6, WB7) mechanically separated from the upstream weigh bridge and arranged to detect the full draft weight of the car after all the axles of the car have left the upstream weigh bridge, material is dispensed into the freight car from a loading chute (18) positioned above one of said weigh bridges, the increasing weight of the freight car during loading is detected taking into consideration the combined weights on the upstream and downstream weigh bridges, and the chute is closed when the detected weight increases to a predetermined limit, characterised in that the full draft weight of the loaded car (12; 38) is determined after all the axles of the car have left the upstream weigh bridge (WB2) taking into consideration only the weight on the downstream weigh bridge (WB3; WB4, WB5, WB6, WB7).

8. A method according to claim 7, characterised in that the downstream weigh bridge comprises a plurality of mechanically separated weigh bridge sections (WB4, WB5, WB6, WB7) operable for full draft weighing during loading of different dimensioned freight cars.

9. A method according to claim 7 or 8, wherein the arrival of the front axle of the car on the downstream weigh bridge (WB3; WB4, WB5, WB6, WB7) is sensed and the chute is opened when the said arrival is sensed.

10. A method according to claim 9, wherein the said arrival is sensed by detecting the movement of the front axle of the car from the upstream weigh bridge (WB2) to the downstream weigh bridge (WB3; WB4, WB5, WB6, WB7).

11. A method according to any one of claims 7 to 10 wherein the arrival of the car at a location at which it is about to move beyond the region below the chute is detected and the chute is closed when the car reaches the said location.

12. A method according to any one of claims 7 to 11, wherein the arrival of a locomotive is sensed and the operation of the loading chute is inhibited when a locomotive is sensed.

**Revendications**

1. Installation permettant de commander le chargement d'un véhicule de transport de marchandises et de déterminer son poids en charge tandis que le véhicule est en mouvement et est attelé à au moins un autre véhicule, l'installation comprenant un pont-bascule amont (WB2) dont la longueur est inférieure à la distance entre un essieu du véhicule et l'essieu le plus proche de l'autre ou des deux autres véhicules, un pont-bascule aval (WB3, WB4, WB5, WB6, WB7) mécaniquement séparé du pont-bascule amont pour détecter le poids de tirage total du véhicule après que tous les essieux du véhicule ont quitté le pont-bascule amont, une goulotte de chargement (18) disposée au-dessus de l'un desdits ponts-bascule et agencée pour distribuer la marchandise à transporter, et des moyens (26) servant à détecter le poids de plus en plus grand du véhicule pendant son chargement en prenant en compte les poids combinés portés par les ponts-bascule amont et aval, et servant à fermer la goulotte lorsque le poids détecté atteint une limite prédéterminée, l'installation étant caractérisée en ce que lesdits moyens (26) sont agencés de façon à déterminer le poids du véhicule chargé (12, 38) après que tous les essieux de ce véhicule ont quitté le pont-bascule amont (WB2), en ne prenant en compte que le poids qui porte sur le pont-bascule aval (WB3, WB4, WB5, WB6, WB7).

2. Installation selon la revendication 1, caractérisée en ce que le pont-bascule aval comprend plusieurs tronçons séparés mécaniquement (WB4, WB5, WB6, WB7) utilisables pour la pesée à plein tirage, en cours de chargement, de véhicules de transport de marchandises de dimensions différentes.

3. Installation selon la revendication 1 ou 2, caractérisée en ce qu'il est prévu des moyens (30) pour détecter l'arrivée de l'essieu avant du véhicule sur le pont-bascule aval (WB3, WB4, WB5, WB6, WB7), et en ce qu'il est prévu des moyens qui réagissent à cette détection en ouvrant la goulotte.

4. Installation selon la revendication 3, caractérisée en ce que lesdits moyens de détection comprennent des moyens servant à détecter le passage de l'essieu avant du véhicule du pont-bascule amont (WB2) sur le pont-bascule aval (WB3, WB4, WB5, WB6, WB7).

5. Installation selon l'une quelconque des revendications précédentes, caractérisée en ce qu'il est prévu des moyens permettant de détecter le moment où le véhicule atteint un endroit où il est sur le point de franchir la région qui se trouve au-dessous de la goulotte, et en ce qu'il est prévu des moyens servant à fermer la goulotte au moment où le véhicule atteint ledit endroit.

6. Installation selon l'une quelconque des revendications précédentes, caractérisée en ce qu'il est prévu des moyens servant à détecter une locomotive et à empêcher le fonctionnement de la goulotte de chargement lorsqu'une locomotive est détectée.

7. Procédé de commande du chargement d'un véhicule de transport de marchandises et de détermination de son poids en charge tandis que le véhicule est en mouvement et est attelé à au moins un autre véhicule, procédé dans lequel on fait passer le véhicule sur un pont-bascule amont (WB2) dont la longueur est inférieure à la distance entre un essieu du véhicule et l'essieu le plus proche du ou des deux autres véhicules, et sur un pont-bascule aval (WB3, WB4, WB5, WB6, WB7) qui est séparé mécaniquement du pont-bascule amont et qui est agencé de façon à détecter le poids de tirage total du véhicule après que tous les essieux de ce véhicule ont quitté le pont-bascule amont, la marchandise à transporter est déversée dans le véhicule par une goulotte de chargement (18) qui est disposée au-dessus de l'un desdits ponts-bascule, le poids de plus en plus grand du véhicule en cours de chargement est détecté en prenant en compte les poids combinés qui portent sur les ponts-bascules amont et aval, et la goulotte se ferme au moment où le poids détecté atteint une limite prédéterminée, le procédé étant caractérisé en ce que le poids de tirage total du véhicule chargé (12, 38) est déterminé après que tous les essieux du véhicule ont quitté le pont-bascule aval (WB2), en ne prenant en compte que le poids qui porte sur le pont-bascule aval (WB3, WB4, WB5, WB6, WB7).

8. Procédé selon la revendication 7, caractérisé en ce que le pont-bascule aval comprend plusieurs tronçons séparés mécaniquement (WB4, WB5, WB6, WB7) utilisables pour la pesée à plein tirage, en cours de chargement, de véhicules de transport de marchandises de dimensions différentes.

9. Procédé selon la revendication 7 ou 8, dans lequel l'arrivée de l'essieu avant du véhicule sur le pont-bascule aval (WB3, WB4, WB5, WB6, WB7) est détectée et la goulotte s'ouvre au moment où ladite arrivée est détectée.

10. Procédé selon la revendication 9, dans lequel ladite arrivée est détectée par détection du passage de l'essieu avant du véhicule du pont-bascule amont (WB2) sur le pont-bascule aval (WB3, WB4, WB5, WB6, WB7).

11. Procédé selon l'une quelconque des revendications 7 à 10, dans lequel l'arrivée du véhicule à un endroit où il est sur le point de franchir la région qui se trouve au-dessous de la goulotte est détectée, et la goulotte se ferme au moment où le véhicule atteint ledit endroit.

12. Procédé selon l'une quelconque des revendications 7 à 11, dans lequel l'arrivée d'une locomotive est détectée et le fonctionnement de la goulotte de chargement est empêché au moment où une locomotive est détectée.

**Patentansprüche**

1. System zur Kontrolle der Beladung eines Güterwagens und zur Bestimmung seines Gewichtes nach der Beladung, während der Güterwagen sich bewegt und mit mindestens einem anderen Fahrzeug verbunden ist, mit einer hinteren Wägebrücke (WB2) mit einer Länge, die geringer ist als der Abstand zwischen einer Achse des Wagens und der benachbarten Achse von dem oder einem der anderen Fahrzeuge, mit einer vorderen Wägebrücke (WB3, WB4, WB5, WB6, WB7), die mechanisch von der hinteren Wägebrücke getrennt ist, um das volle Ladegewicht des Wagens zu messen, nachdem sämtliche Achsen des Wagens die hintere Wägebrücke verlassen haben, mit einer Laderutsche (18), die über einer der Wägebrücken angeordnet und zum Austragen von Material ausgelegt ist, und mit einer Einrichtung (26) zum Messen des zunehmenden Gewichtes des Güterwagens während der Beladung unter Berücksichtigung der kombinierten Gewichte der hinteren und vorderen Wägebrücken und zum Schließen der Laderutsche, wenn das gemessene Gewicht auf einen vorgegebenen Grenzwert ansteight, dadurch gekennzeichnet, daß die Einrichtung (26) so ausgelegt ist, daß sie das Gewicht des beladenen Wagens (12; 38) bestimmt, nachdem sämtliche Achsen des Wagens die hintere Wägebrücke (WB2) verlassen haben, wobei nur das Gewicht auf der vorderen Wägebrücke (WB3; WB4, WB5, WB6, WB7) berücksichtigt wird.

2. System nach Anspruch 1, dadurch gekennzeichnet, daß die vordere Wägebrücke eine Vielzahl von mechanisch getrennten Wägebrückenbereichen (WB4; WB5; WB6; WB7) aufweist, die zum Wägen des vollen Ladegewichtes während der Beladung von unterschiedlich dimensionierten Güterwagen ausgelegt sind.

3. System nach Anspruch 1 oder 2, dadurch gekennzeichnet, daß eine Einrichtung (30) vorgesehen ist, um die Ankunft der Vorderachse des Wagens auf der vorderen Wägebrücke (WB3; WB4, WB5, WB6, WB7) abzutasten, und daß eine Einrichtung vorgesehen ist, die auf diese Abtastung anspricht, um die Laderutsche zu öffnen.

4. System nach Anspruch 3, dadurch gekennzeichnet, daß die Abtasteinrichtung Mittel aufweist, um die Bewegung der Vorderachse des Wagens von der hinteren Wägebrücke (WB2) zur vorderen Wägebrücke (WB3; WB4, WB5, WB6, WB7) zu messen.

5. System nach irgendeinem der vorherigen Ansprüche, dadurch gekennzeichnet, daß eine Einrichtung vorgesehen ist, um abzutasten, wenn der Wagen einen Ort erreicht, an dem er sich gerade aus dem Bereich unterhalb der Laderutsche herausbewegt, und daß eine Einrichtung vorgesehen ist, um die Laderutsche zu schließen, wenn der Wagen diesen Ort erreicht.

6. System nach irgendeinem der vorherigen Ansprüche, dadurch gekennzeichnet, daß eine Einrichtung vorgesehen ist, um eine Lokomotive abzutasten und den Betrieb der Laderutsche zu sperren, wenn eine Lokomotive abgetastet wird.

7. Verfahren zur Steuerung der Beladung eines Güterwagens und zur Bestimmung seines Gewichtes nach der Beladung, wobei sich der Güterwagen bewegt und mit mindestens einem anderen Fahrzeug verbunden ist, wobei man den Güterwagen sich über eine hintere Wägebrücke (WB2) mit einer Länge, die geringer ist als der Abstand zwischen einer Achse des Wagens und der benachbarten Achse von dem oder einem der anderen Fahrzeuge, und über eine vordere Wägebrücke (WB3; WB4, WB5, WB6, WB7) bewegen läßt, die mechanisch von der hinteren Wägebrücke getrennt und zur Abtastung des vollen Ladegewichtes des Wagens ausgelegt ist, nachdem sämtliche Achsen des Wagens die hintere Wägebrücke verlassen haben, wobei Material von einer Laderutsche (18), die über einer der Wägebrücken angeordnet ist, in den Güterwagen ausgetragen wird und das zunehmende Gewicht des Güterwagens während der Beladung gemessen wird, indem man die kombinierten Gewichte auf den hinteren und vorderen Wägebrücken berücksichtigt, und wobei die Laderutsche geschlossen wird, wenn das gemessene Gewicht auf einen vorgegebenen Grenzwert ansteight, dadurch gekennzeichnet, daß das volle Ladegewicht des beladenen Wagens (12; 38) bestimmt wird, nachdem sämtliche Achsen des Wagens die hintere Wägebrücke (WB2) verlassen haben, wobei nur das Gewicht auf der vorderen Wägebrücke (WB3; WB4, WB5, WB6, WB7) berücksichtigt wird.

8. Verfahren nach Anspruch 7, dadurch gekennzeichnet, daß die vordere Wägebrücke eine Vielzahl von mechanisch getrennten Wägebrückenbereichen (WB4, WB5, WB6, WB7) aufweist, die zum Wägen des vollen Ladegewichtes während der Beladung von unterschiedlich dimensionierten Güterwagen ausgelegt sind.

9. Verfahren nach Anspruch 7 oder 8, dadurch gekennzeichnet, daß die Ankunft der Vorderachse des Wagens auf der vorderen Wägebrücke (WB3; WB4, WB5, WB6, WB7) abgetastet und die Laderutsche geöffnet wird, wenn dies Ankunft abgetastet wird.

10. Verfahren nach Anspruch 9, dadurch gekennzeichnet, daß die Ankunft abgetastet wird, indem man die Bewegung der Vorderachse des Wagens von der hinteren Wägebrücke (WB2) zur vorderen Wägebrücke (WB3; WB4, WB5, WB6, WB7) abtastet.

11. Verfahren nach irgendeinem der Ansprüche 7 bis 10, dadurch gekennzeichnet, daß die Ankunft des Wagens an einem Ort, an dem er sich gerade aus dem Bereich unterhalb der Laderutsche herausbewegt, abgetastet und die Laderutsche geschlossen wird, wenn der Wagen diesen Ort erreicht.

12. Verfahren nach irgendeinem der Ansprüche 7 bis 11, dadurch gekennzeichnet, daß die Ankunft einer Lokomotive abgetastet und der Betrieb der Laderutsche gesperrt wird, wenn eine Lokomotive abgetastet wird.

FIG. 1

FIG. 2

FIG. 3

0019479

FIG. 4

FIG. 5

FIG. 6

0019479